(19) Europäisches Patentamt
European Patent Office
Office européen des brevets

(11) **EP 2 134 653 B1**

(12) **FASCICULE DE BREVET EUROPEEN**

(45) Date de publication et mention
de la délivrance du brevet:
**25.10.2017 Bulletin 2017/43**

(51) Int Cl.:
***C02F 1/42*** *(2006.01)*

(21) Numéro de dépôt: **08787884.9**

(22) Date de dépôt: **01.04.2008**

(86) Numéro de dépôt international:
**PCT/FR2008/000445**

(87) Numéro de publication internationale:
**WO 2008/142254 (27.11.2008 Gazette 2008/48)**

(54) **DISPOSITIF ET PROCEDE DE TRAITEMENT PAR ECHANGE D'IONS**

IONENAUSTAUSCHVORRICHTUNG UND -VERFAHREN

ION-EXCHANGE TREATMENT DEVICE AND PROCESS

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **04.04.2007 FR 0702460**

(43) Date de publication de la demande:
**23.12.2009 Bulletin 2009/52**

(73) Titulaire: **Ondeo Industrial Solutions
92420 Vaucresson (FR)**

(72) Inventeurs:
• **VANDERGHOTE, Guy
59700 Marcq en Baroeul (FR)**
• **FOUACHE, Pascal
59000 Lille (FR)**
• **DUCHAMP, Marc
92400 Courbevoie (FR)**

(74) Mandataire: **Cabinet Armengaud Aîné
16, rue Gaillon
75002 Paris (FR)**

(56) Documents cités:
WO-A-2006/026786     FR-A- 1 109 174
US-A- 5 069 779     US-A1- 2002 117 431
US-A1- 2003 052 060

**Description**

La présente invention est relative à un dispositif de traitement de liquides et plus particulièrement de traitement d'eau potable, par échange d'ions, comportant plusieurs échangeurs d'ions montés en parallèle et dont les cycles sont décalés. Les dispositifs selon l'invention peuvent en outre comporter des moyens limitant la production d'éluats et des moyens de miniaturisation dudit dispositif. Les dispositifs selon l'invention sont particulièrement adaptés à la dénitratation des eaux de consommation. Selon une variante, les dispositifs sont également adaptables à la décarbonatation des eaux. La publication de la demande de brevet US 2002/0117431 A1 décrit un dispositif et un procédé de traitement des eaux utilisant plusieurs échangeurs d'ions montés en parallèle.

Les échangeurs d'ions sont des résines synthétiques se présentant sous la forme de petites billes qui possèdent des groupements actifs, de charge négative pour les échangeurs de cations et positive pour les échangeurs d'anions. Chaque site actif est neutralisé par un contre-ion en solution dans le liquide ou l'eau en contact avec la résine. Ce sont ces contre-ions qui vont faire l'objet des réactions d'échange.

Dans le cas de la dénitratation, ce sont les ions $NO3^-$ contenus dans l'eau qui vont être échangés avec les ions $Cl^-$ fixés sur la résine.

Il existe des résines du type anionique forte, de qualité alimentaire possédant une affinité plus ou moins grande pour les ions nitrates que pour les autres anions (sulfates, bicarbonates, chlorures).

Au bout d'un certain temps d'utilisation, la résine se sature avec les anions contenus dans l'eau à traiter, et son pouvoir d'échange diminue. Il faut alors faire passer sur la résine une importante concentration du contre-ion $Cl^-$ qui fait l'objet de l'échange : c'est la régénération. Celle-ci s'effectue classiquement à contre-courant avec une solution à environ 100 g/l de NaCl.

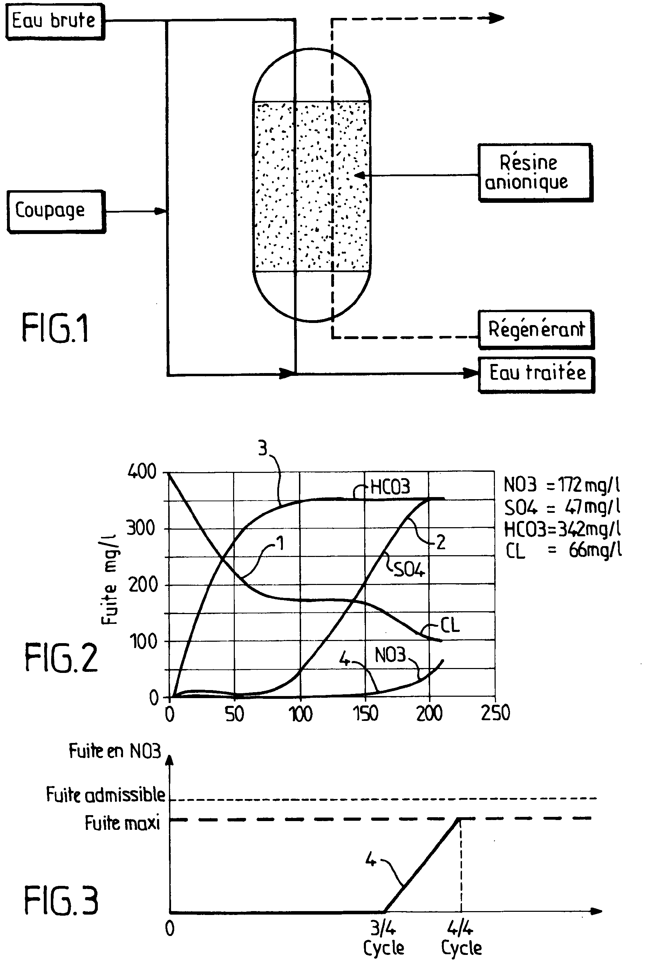

La figure 1 des dessins annexés, est un schéma de fonctionnement d'un échangeur d'anions de type contre courant. L'eau brute est traitée lors de sa circulation opérant du haut vers le bas de l'appareil, tandis que lors de la régénération le régénérant circule à contresens.

En général, pour parvenir à la valeur souhaitée en nitrate, on peut ne traiter sur résines qu'une partie du débit total, et on effectue un coupage de l'eau traitée avec l'eau brute, comme cela est indiqué sur la figure 1.

Par « cycle de production», on entend une période de production comprise entre la mise en service d'un échangeur et le moment où la résine de l'échangeur est considérée comme arrivée à saturation c'est-à-dire le moment où la fuite en un ion donné atteint la valeur de la fuite maximum. Par exemple, pour la dénitratation, lorsque la fuite en ion nitrate atteindra la valeur de fuite maximum, l'échangeur sera mis en régénération. Un cycle complet correspond à la période comprise entre deux régénérations, c'est à dire à la durée d'un cycle de production majorée de celle d'une régénération.

Par « fuite », on entend la quantité d'ions d'une espèce qui n'est pas retenue par la résine. La fuite est généralement exprimée en concentration dans l'eau traitée. Il existe une fuite dite « admissible » déterminée par la réglementation ou par un critère spécifique de qualité et une fuite dite « maximum », strictement inférieure à la fuite admissible, permettant d'établir une marge de sécurité par rapport à la fuite admissible. La valeur de la fuite maximum est fonction de l'analyse d'eau à traiter, du taux de régénération ainsi que du volume de cycle choisis.

La figure 2 présente, pour un cycle de production, un exemple de courbes d'évolution de la qualité de l'eau produite en fonction du nombre de volumes d'eau traité par volume de résine (hors coupage).

Courbe 1 relative à la teneur en chlorures : (valable quelle que soit la résine anionique utilisée)

En début de cycle de production, tous les sites actifs ont comme contre-ion $Cl^-$ : la résine pourra donc fixer tous les anions. Il y a échange des ions chlorures $Cl$ fixés sur la résine avec les ions nitrates $NO_3^-$ contenus dans l'eau, mais également avec les autres anions, tels que $HCO_3^-$ et $SO_4^{2-}$ contenus dans l'eau. Par conséquent, selon la courbe 1, on note une augmentation importante de la teneur en chlorures dans l'eau produite en début de cycle, ce qui implique de vérifier la compatibilité de l'eau, après coupage, avec la réglementation «eau potable» ($Cl^- \leq 250$ mg/l).

Par la suite, au fur et à mesure que le lit de résine se sature, la « fuite » de chlorures diminue, l'élimination des nitrates étant obtenue en partie par permutation des nitrates avec les bicarbonates ou sulfates déjà fixés sur la résine.

Courbe 2 relative à la teneur en sulfates : (exemple d'une résine à forte affinité pour les nitrates)

En fin de cycle de production, les ions $SO4^{2-}$ ne sont plus retenus par la résine. Au contraire, une partie des ions $SO4^{2-}$ retenus par la résine en début de cycle est permutée avec les ions nitrate de l'eau brute et se retrouve dans l'eau traitée. Ceci provoque une augmentation significative de la teneur en sulfates dans l'eau produite en fin de cycle, comme visible d'après la courbe 2 de la figure 2.

Il faut donc de nouveau vérifier la compatibilité de l'eau après coupage avec la réglementation «eau potable» ($SO4^{2-} \leq 250$ mg/l)

L'équilibre calco-carbonique (courbe 3): (valable quelle que soit la résine anionique utilisée)

L'équilibre calco-carbonique de l'eau doit également être pris en compte : la réglementation impose de distribuer une eau légèrement entartrante afin de limiter l'attaque des canalisations, notamment celles en plomb. Or, la teneur en TAC (ions HCO3⁻) dans l'eau traitée varie en fonction de l'état d'avancement du cycle comme illustré par la courbe 3: elle est pratiquement nulle en début de cycle pour revenir à la teneur de l'eau brute au bout d'un tiers du cycle environ. Cette variation importante de la TAC entraîne un déplacement de l'équilibre calco-carbonique de l'eau tout au long du cycle.

| 1 seul échangeur | Eau brute | Eau dénitratée En début de cycle | Eau distribuée (après coupage 50%) |
|---|---|---|---|
| TH °f | 30 | 30 | 30 |
| TAC °f | 25 | 1 | 13 |
| pH | 7.5 | 6.1 | 7.2 |
| $CO_2$ en ppm | 15 | 15 | 15 |
| | Entartrante | Agressive | **agressive** |

| 1 seul échangeur | Eau brute | Eau dénitratée en fin de cycle | Eau distribuée (après coupage 50%) |
|---|---|---|---|
| TH °f | 30 | 30 | 30 |
| TAC °f | 25 | 25 | 25 |
| pH | 7.5 | 7.5 | 7.5 |
| $CO_2$ en ppm | 15 | 15 | 15 |
| | **Entartrante** | **Entartrante** | **Entartrante** |

TAC signifie Titre Alcalimétrique Complet. Il correspond à la teneur de l'eau en ions hydroxydes, carbonates et hydrogénocarbonates.

TH signifie Titre Hydrotimétrique. Il correspond à la durée de l'eau, c'est-à-dire sa teneur en ions calcium et magnésium.

Les concentrations sont exprimées dans le tableau ci-dessus en degré français. Le degré français (°f) est une unité permettant d'exprimer les concentrations des principaux ions d'une eau et correspondant à la concentration d'une solution N/5000, N étant nombre d'Avogadro. A titre d'exemple, on donne les conversions suivantes : 5°f = 1 meq.L⁻¹ ou 1°f = 10ppm de $CaCo_3$.

En outre, on notera les problématiques suivantes :

- En amont, si l'eau brute est entartrante, des colmatages sur les résines peuvent avoir lieu pendant la dernière moitié du cycle en raison de la remontée du TAC. Dans ce cas, elle est rendue légèrement « agressive » durant cette période, par un ajout d'acide. Une autre solution consiste à effectuer chaque régénération avec une solution légèrement acidifiée, afin d'éliminer les germes de cristallisation (CaCO3).
- En aval, la réglementation impose de distribuer une eau légèrement entartrante afin de limiter l'attaque des canalisations, notamment celles en plomb. Si l'eau coupée est agressive, notamment en début de cycle, il est nécessaire de procéder à une injection de soude.

Il ressort de cette analyse que les teneurs en bicarbonates, chlorures, sulfates et nitrates fluctuent tout au long du cycle de production et l'eau ainsi produite passe périodiquement d'un état très agressif à un état entartrant. Dans certains cas de figure, l'eau traitée est même impropre à la consommation. Une première solution consiste à couper l'eau traitée avec de l'eau brute. Alternativement, il est possible d'utiliser deux échangeurs d'ions en service, traitant chacun la moitié du débit et dont les cycles sont décalés de 50%. Cependant, aucune de ces solutions ne s'avère satisfaisante car elles laissent subsister de grandes variations dans les valeurs des différents paramètres, obligeant ainsi à un contrôle permanent et vigilant de chacun de ces paramètres et à une réponse appropriée selon les résultats des contrôles effectués.

L'invention a permis de trouver une solution pour pallier les inconvénients listés ci-avant et de limiter de manière drastique les corrections nécessaires à rendre l'eau traitée propre à la consommation. Ainsi, l'invention consiste en un dispositif de traitement d'un liquide par échange d'ions, comportant un circuit de régénération des résines contenues dans des échangeurs d'ions, comportant au moins n=6 échangeurs d'ions actifs chacun fonctionnant selon un cycle complet d'une durée C comprenant un cycle de production et un cycle de régénération, montés en parallèle, et des moyens permettant de décaler les cycles, un bac de stockage agencé pour recevoir les fractions d'éluats de régénération utilisables comme eau de service pour les régénérations suivantes, caractérisé en ce que les moyens permettant de décaler les cycles sont agencés pour décaler les cycles de C/(n-1), et pour qu'il y ait en permanence un échangeur en régénération les (n-1) autres échangeurs d'ions actifs étant en fonctionnement, en ce qu'un conductivimètre est prévu sur le circuit de régénération des résines pour mesurer la salinité des éluats, et en ce que ledit conductivimètre est relié à un automate pour commander, en fonction de leur salinité mesurée, le rejet ou la réutilisation en eau de service des éluats. Par « moyens permettant de décaler les cycles », on entend des moyens tels qu'un ensemble de commandes comportant notamment un dispositif de comptage des volumes d'eau traitée et un système de vannes permettant les mises en service ou hors service successives des échangeurs d'ions.

Dans toute la présente demande, le liquide traité est préférentiellement de l'eau. En effet, le dispositif selon l'invention est particulièrement adéquat pour les traitements des eaux de consommation.

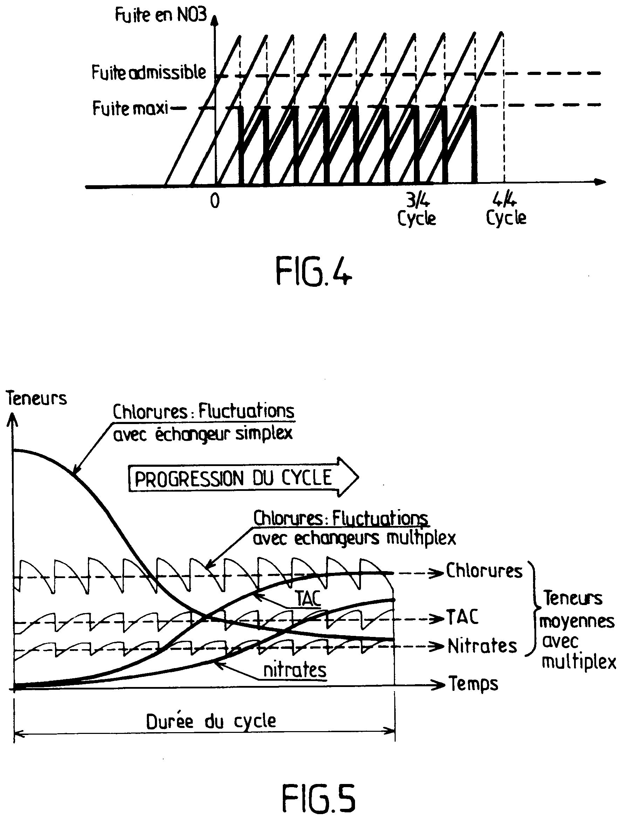

L'utilisation d'au moins n=6 échangeurs d'ions actifs montés en parallèle dont les cycles de durée C sont décalés de C/(n-1) permet d'obtenir un équilibre calco-carbonique quasi-constant dans le temps (voir Fig. 5). Un tel résultat permet donc de programmer de manière définitive la correction nécessaire à rendre l'eau conforme à la réglementation en vigueur. Dans certains cas, il est même possible de supprimer complètement cette correction et d'éviter ainsi le dosage de soude nécessaire à cette correction.

Le dispositif selon l'invention permet également d'obtenir un lissage des différentes courbes étudiées ci-avant (variation de faible amplitude). On obtient donc une stabilisation des teneurs des différents anions (chlorures, bicarbonates, sulfates et nitrates) tout au long du cycle (voir Fig. 5). L'obtention d'un tel résultat permet alors d'optimiser le réglage de la fuite et de réaliser des économies sur la consommation de sel utilisé lors de la régénération.

En effet, chaque échangeur est paramétré pour que la fuite maximum soit inférieure à un seuil que l'on se fixe. La figure 3 des dessins annexés présente une schématisation d'une courbe 4 de fuite en nitrates au cours du cycle de l'échangeur. Il est à noter que lorsque le traitement est effectué sur un seul échangeur, pendant les 3 premiers quarts du cycle, la fuite de nitrate est quasi nulle et est donc bien en deçà des limites que l'on se fixe. Le taux de régénération est donc choisi pour que la fuite qui apparaît dans le dernier quart du cycle reste inférieure à la valeur admissible.

Par « taux de régénération », on entend la quantité de sel utilisé par litre de résine lors de la phase de régénération.

Si l'on utilise plusieurs échangeurs en parallèle selon l'invention, la fuite maximum du système sera égale à la moyenne des fuites de chacun des appareils. Les inventeurs ont déterminé que lorsque l'on place au moins n=6 échangeurs, la fuite maximum de l'ensemble est alors nettement inférieure à la fuite maximum d'un seul appareil comme cela est présenté sur la figure 4. En effet, dans ce cas, l'eau produite est le résultat du mélange :

- de l'eau provenant de quelques appareils dont la fuite est élevée (ceux qui se trouvent dans le dernier quart du cycle),
- avec l'eau provenant de la plupart des appareils dont la fuite est quasi nulle (ceux qui se trouvent dans les 3 premiers quarts du cycle).

Pour garantir la même fuite admissible, il est donc possible de réduire le taux de régénération et donc la consommation de sel d'environ 10 à 30%. La fuite maximum de l'installation sera alors plus élevée mais restera inférieure à la limite admissible, même si la fuite maximum de chacun des échangeurs est supérieure à la fuite admissible.

Plus particulièrement, l'invention propose un dispositif de traitement d'un liquide par échange d'ions caractérisé en ce qu'à la place des p = 2 ou 3 échangeurs d'ions actifs montés en parallèle de volume total de résine V, il comporte au moins n = 6 échangeurs d'ions de cycle de durée C, montés en parallèle dont le volume total de résine v est inférieur ou égal à :

$$v = V \times p(n) / (p+1)(n-1)$$

pour un débit équivalent, et des moyens permettant de décaler les cycles de C/(n-1).

Par exemple, pour les valeurs de p = 2 et n = 9, v = 0,75 V.

Le volume v réellement mis en oeuvre est en général inférieur au volume calculé par la formule ci-avant car par l'effet de dilution déjà décrit, il est possible d'admettre une fuite maximum par échangeur supérieure à celle possible sur une installation qui comporterait moins d'échangeurs actifs.

En effet, pour un même débit de liquide à traiter, les inventeurs ont mis en évidence que, de manière surprenante, la mise en parallèle de n échangeurs d'ions permettait de réduire significativement le volume de résine à mettre en oeuvre (voir les exemples 1 et 2). Ceci permet donc une économie notable des investissements, non seulement sur le volume de résine mais également sur les installations, celles-ci se trouvant alors être de taille réduite, avec des contraintes mécaniques limitées. En outre, les résines étant des consommables, leur diminution de volume permet également une économie sur les coûts de renouvellement.

De préférence, on utilisera une valeur de v égale à 0,5 à 0,7V.

Selon un mode de réalisation avantageux, le dispositif de traitement d'un liquide par échange d'ions caractérisé en ce qu'il comporte au moins n = 6 échangeurs d'ions de cycle d'une durée C, montés en parallèle, des moyens permettant de décaler les cycles de C/(n-1), ainsi qu'un circuit de régénération des résines contenues dans les échangeurs d'ions, ledit circuit comportant un bac de stockage destiné à recevoir les fractions d'éluats de régénération utilisables comme eau de service pour les régénérations suivantes.

Jusqu'à présent, il était impossible de réutiliser une partie des éluats de régénération pour les régénérations suivantes.

En effet, dans le dispositif selon l'invention, les éluats sont collectés et leur devenir est différent en fonction de leur salinité :

- Faible salinité : éluats réutilisés par le système comme eau de service pour la régénération suivante,
- Forte salinité : éluats rejetés, correspondant à la seule perte d'eau.

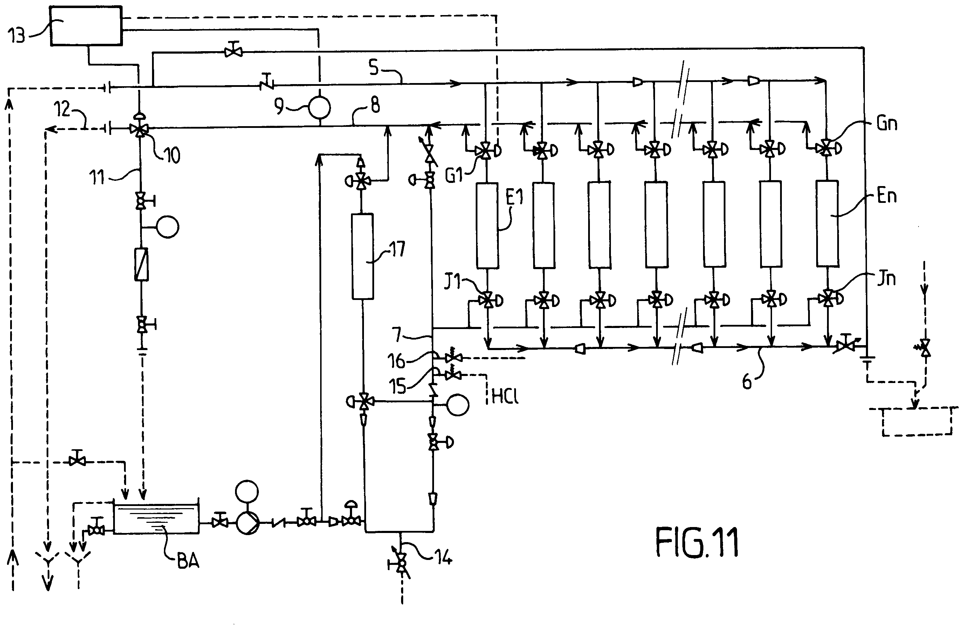

De plus, la multiplication des échangeurs corrélée à une diminution des volumes de résine à régénérer permet de disposer d'un bac de stockage des fractions d'éluats susceptibles d'être réintroduite dans le circuit des eaux de service comme cela est présenté sur la figure 11. En effet, les eaux de service présentent deux caractéristiques principales liées au dispositif selon l'invention :

- elles ont un faible volume du à la limitation du volume de résine dans chaque échangeur, et,
- elles sont en circulation permanente dans le dispositif grâce à la multiplication des échangeurs et à la régénération successive et permanente d'un des échangeurs.

Par conséquent, ces eaux ne stagnent pas ou peu dans le bac de stockage, appelé également bac de service, et peuvent donc être réutilisées dans les processus de régénération suivants. De plus, selon l'invention, le bac de stockage sera de faible volume par rapport à celui qu'il faudrait mettre en oeuvre pour une installation avec moins d'échangeurs actifs. Il est plus facile à implanter et à maintenir éventuellement hors gel.

Préférentiellement, le dispositif comportera au moins 9 échangeurs, ainsi qu'un échangeur complémentaire réservé à l'adoucissement de l'eau de régénération.

En effet, la valeur n=9 correspond à un cycle de production de 12 heures pour une durée de régénération de 1h30. Elle permet donc de maintenir en permanence un des 9 échangeurs en régénération tandis que les 8 autres travaillent en traitement.

Un cycle de production de 12 heures permet d'être conforme aux préconisations usuelles des fournisseurs de résine et aux pratiques industrielles. Il évite une usure prématurée des résines du fait des chocs osmotiques à chaque régénération. Il optimise les consommations d'eau et de réactif de régénération. Il est suffisant pour permettre d'effectuer les interventions éventuelles de réparation en cas de dysfonctionnement.

Dans ces conditions, on a en permanence un échangeur en régénération (C/(n-1) = 12/8 = 1,5 = durée d'une régénération). Il n'y a donc pas d'eau stagnante dans le système.

Toutefois, l'utilisation de 6, 7 ou 8 échangeurs et d'un nombre supérieur à neuf échangeurs reste toujours possible.

Dans le cas où 6, 7 ou 8 échangeurs sont utilisés, les temps de régénération peuvent être plus longs ou alors une pause est opérée entre les phases de régénération. Ceci engendre alors un temps de stagnation de l'eau de régénération variable de 1,5 à 4,5 heures d'attente, ce qui reste acceptable.

L'invention vise plus particulièrement une combinaison de tous les moyens ci-avant. Ces moyens coopèrent en effet pour permettre d'optimiser le rendement du dispositif selon l'invention tout en minimisant les coûts d'investissement et de fonctionnement.

Le dispositif de traitement selon l'invention est donc caractérisé en ce qu'à la place des p= 2 ou 3 échangeurs d'ions montés en parallèle, de volume total de résine V, il comporte :

- au moins n=6 échangeurs d'ions actifs de cycle d'une durée C, montés en parallèle, dont le volume total de résine v est au plus égal à v = V x p (n) / (p+1)(n-1), et des moyens permettant de décaler les cycles de C/(n-1), et,
- un circuit de régénération des résines contenues dans les échangeurs d'ions, ledit circuit comportant un bac de stockage destiné à recevoir les fractions d'éluats de régénération utilisables comme eaux de service pour les régénérations suivantes.

Le dispositif ci-dessus est plus particulièrement décrit dans les exemples qui suivent. En particulier des comparaisons sont réalisées avec les dispositifs classiques actuellement connus (deux échangeurs). Les dispositifs selon l'invention comportent sur le circuit de régénération, un conductivimètre permettant l'aiguillage des éluats vers le rejet ou le système d'eau de service (voir en particulier l'exemple 3 ci-après).

Plus particulièrement les dispositifs visés par l'invention comportent des échangeurs d'anions, en vue du traitement de l'eau potable. Alternativement, les échangeurs peuvent être des échangeurs de cations faibles lorsque le traitement envisagé est la décarbonatation. Dans ce dernier cas, les échangeurs fonctionnent alors à co-courant contrairement à ce qui est indiqué en figure 1.

Dans le cas où le traitement est la dénitratation, les dispositifs comporteront avantageusement un adoucisseur sur le circuit de régénération.

En effet, lors de la régénération, il est nécessaire de s'assurer que la concentration en $Ca^{2+}$ et en $SO4^{2-}$ ne génèrent pas un risque important de précipitation de $CaSO4$. Pour permettre la dilution de la saumure de NaCl nécessaire à la régénération, de 300 g/l à environ 100 g/l, et la phase de rinçage lent, il est donc nécessaire d'utiliser de l'eau dont la teneur en calcium ne sera pas génératrice de dépôts de tartre sulfaté sur les résines de dénitratation. Ceci est fonction de la quantité de sulfates captés sur les résines et du calcium introduite par l'eau de régénération. Dans ce cas, il est préférable de prévoir l'élimination du calcium dans les eaux de régénération par l'introduction d'un adoucisseur de l'eau de régénération. L'adoucissement peut être réalisé par un échangeur de cations sur résines.

L'invention vise également un échangeur particulièrement adapté pour les dispositifs de traitement décrit ci-avant.

L'échangeur d'ions à contre courant selon l'invention comporte une colonne comprenant deux moyens de répartition et/ou de collecte de fluide entre lesquels se trouve le lit de résine et un plateau percé, situé en partie basse de l'échangeur au dessus du moyen de répartition et/ou de collecte de fluide inférieur, permettant l'accélération du flux interne lors des phases de régénération à contre-courant.

Les moyens de répartition et/ou de collecte sont en général des plateaux à buselures ou des collecteurs ramifiés. Classiquement, le lit de résine occupe au moins 95% du volume compris entre ces deux moyens. Le blocage du lit de résine lors de la régénération est obtenu par une séquence préliminaire dite de « compactage ». Elle consiste à soumettre le lit de résine à un fort courant d'eau ascendant (le cycle de production de l'échangeur s'effectuant de haut en bas et sa régénération de bas en haut). Du fait de la vitesse élevée et de la faible hauteur libre, le lit de résine monte en piston et vient se bloquer contre le moyen de répartition et/ou de collecte supérieur sans avoir la possibilité de s'expanser et, par conséquent, sans risque de mélange des couches. Après cette phase de compactage, le degré de compacité de la couche de résine est tel qu'il est possible ensuite d'injecter les réactifs à des vitesses nettement plus faibles, sans que le lit de résine retombe et se désagrège.

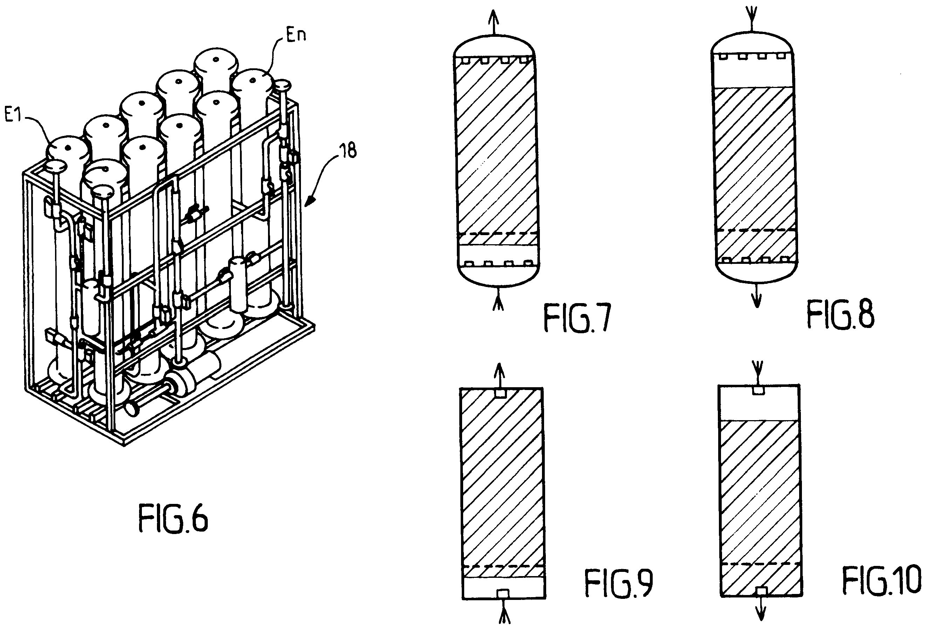

Le plateau percé selon l'invention, liaisonné au corps de l'échangeur, permet lors de la phase de compactage d'emprisonner la quasi totalité du volume de résine dans le compartiment supérieur ainsi matérialisé (Fig. 7). La résine s'appuyant en partie sur la surface pleine du plateau est maintenue dans ce compartiment supérieur avec un débit réduit du fait de la vitesse plus élevée du fluide au passage des trous.

L'étape de compactage nécessite d'appliquer momentanément un fort courant ascendant. Ceci est effectué traditionnellement par une augmentation importante du débit des eaux de service. L'introduction du plateau percé permet de diminuer notablement la section d'introduction de ce courant ascendant, jusqu'à la diviser par deux et donc d'en augmenter la pression. Les débits nécessaires au compactage et au maintien du lit pendant la régénération sont par conséquent diminués et le volume d'eau de service réduit.

L'effet de compactage ainsi obtenu est très nettement supérieur à celui des procédés classiques. De même, le maintien du lit à l'état compacté pendant les phases de passage régénérant et de poussage est facilité (Fig. 7).

L'utilisation de ce plateau permet également l'optimisation de la concentration du régénérant au passage sur la résine en évitant les excès de dilution souvent nécessaires avec les procédés classiques afin d'obtenir un débit minimum nécessaire pour le maintien du lit à l'état compacté.

En résumé, ce dispositif par l'amélioration du compactage permet une utilisation optimale du régénérant en terme de concentration. Il améliore les conditions hydrauliques de l'échange d'ions lors de la régénération. Il engendre :

- une réduction des débits d'eau de service,
- une réduction des volumes d'effluents,
- une réduction de la consommation de régénérant par m3 d'eau produite.

Les dispositifs selon l'invention sont préférentiellement mis en oeuvre à l'aide de cet échangeur.

Dans le cadre d'une utilisation selon le(s) dispositif(s) selon l'invention, les échangeurs peuvent ne pas comporter de fonds bombés (Fig. 9 et 10). En effet, l'absence de fonds bombés sur les échangeurs permet l'élimination de volumes morts et donc une réduction substantielle du volume des eaux de service.

Dans une installation classique, les fonds bombés sont nécessaires afin de supporter la pression de service. L'utilisation de fonds plats de grands diamètres impliquerait en effet la mise en oeuvre de très fortes épaisseurs, voire la mise en place de raidisseurs. L'invention étant prévue pour un fonctionnement à basse pression, les échangeurs étant de faible diamètre, il est donc possible d'utiliser des fonds plats.

Selon un mode de réalisation avantageux, les dispositifs selon l'invention seront présentés sous la forme de cassette dans laquelle sont assemblés les différents éléments desdits dispositifs. En particulier, les dispositifs auront des dimensions réduites, de l'ordre de 2 x 4,5 x 2,5 m pour une installation à 9 échangeurs de diamètre 500 mm avec un échangeur d'adoucissement.

L'emprise au sol et la hauteur sous plafond sont alors minimales et permettent une implantation dans un local réduit ou, lorsque l'ensemble se présente sous forme de cassette, sur une simple dalle extérieure, évitant ainsi des travaux de génie-civil (un local technique spécifique est alors inutile) et réduisant les délais dans la mise en exploitation.

L'invention propose également un procédé de traitement d'un liquide par échange d'ions mettant en oeuvre un des dispositifs selon l'invention, caractérisé en ce que les n échangeurs d'ions sont successivement régénérés, les n-1 autres échangeurs d'ions actifs étant alors en fonctionnement.

Un tel procédé permet de maintenir les eaux de service en circulation permanente ou quasi-permanente et ainsi d'éviter leur stagnation dans le bac de stockage, ce qui rendrait leur usage impropre à des régénérations ultérieures.

L'invention vise enfin l'utilisation des dispositifs décrit ci-avant pour la dénitratation et la décarbonatation de l'eau.

D'autres caractéristiques et avantages de la présente invention ressortiront de la description faite ci-après en référence aux dessins annexés qui en illustrent des exemples de mise en oeuvre dépourvus de tout caractère limitatif.

Sur les dessins :

La figure 1 de ces dessins est une coupe schématique d'un échangeur d'ions, avec circuit d'eau traitée et circuit de régénération.

La figure 2 est un diagramme illustrant des fuites en ions portées en ordonnées en fonction du volume d'eau traité par volume de résine (« bed volume ») portés en abscisse.

La figure 3 est un diagramme illustrant la fuite en NO3 portée en ordonnée en fonction de la durée du cycle porté en abscisse dans le cas d'un seul échangeur.

La figure 4 est un diagramme illustrant la fuite en NO3, portée en ordonnée, en fonction de la durée du cycle portée en abscisse, dans le cas de plusieurs échangeurs d'ions fonctionnant en parallèle selon l'invention.

La figure 5 est un diagramme illustrant les variations des teneurs en différents ions, en fonction de la durée d'un cycle, dans le cas d'un échangeur d'ions unique (simplex) comparé au dispositif selon l'invention avec plusieurs échangeurs en parallèle (multiplex).

La figure 6 est un schéma en perspective d'une cassette d'échangeurs d'ions selon l'invention déplaçable en bloc.

Les figures 7 et 8 sont des coupes schématiques verticales d'un échangeur d'ions, comportant un plateau percé et des plateaux à buselures, respectivement en cours de traitement et en cours de régénération.

Les figures 9 et 10 sont des coupes verticales schématiques d'un autre type d'échangeur d'ions comportant une buselure centrale à chaque extrémité, un plateau percé, sans fond bombé, respectivement en cours de traitement et en cours de régénération.

La figure 11 est un schéma d'une installation avec plusieurs échangeurs d'ions en parallèle selon l'invention.

Les figures 1 à 4 ont été commentées précédemment.

Sur la figure 5, les courbes en trait épais correspondent aux fluctuations des teneurs en chlorures, TAC et nitrates avec un échangeur simplex. Les courbes en dents de scie, en trait fin, correspondent aux fluctuations des teneurs en chlorures, TAC et nitrates avec le système multiplex selon l'invention, les traits en pointillés correspondant aux valeurs moyennes des fluctuations.

La figure 6 est commentée plus loin, après description de la figure 11.

Les figures 7 et 8 illustrent en coupe verticale un échangeur d'ions comportant une enveloppe cylindrique d'axe vertical, fermée à chaque extrémité longitudinale par un fond bombé vers l'extérieur. Un plateau horizontal percé, représenté par un trait en tirets, est prévu à une certaine distance du fond bombé inférieur. Un système de répartition est prévu à chaque extrémité haute et basse de l'échangeur : plateau à buselures pour les grands diamètres d'échangeur (Fig.7) ou buselure centrale unique pour les échangeurs de faible diamètre (Fig.9). Les buselures sont représentées par de petits rectangles (Fig.7 et 9). Le lit de résine est représenté par une zone hachurée. Le plateau percé inférieur permet le passage de grains ou billes de résine sous l'effet d'une pression exercée sur le lit de résine.

En fonctionnement normal (production), avec écoulement du fluide de haut en bas, selon Fig. 8, le lit de résine s'appuie contre le plateau à buselures inférieur et est donc compacté naturellement sous l'effet de son propre poids.

Lors de la régénération à contre courant, avec écoulement du fluide de bas en haut (Fig.7) le lit de la résine traverse le plateau perforé inférieur et vient s'appuyer contre le plateau à buselures supérieur. Le niveau inférieur du lit de résine se situe légèrement en dessous du plateau perforé inférieur.

Les figures 9 et 10 illustrent respectivement en fonctionnement normal (Fig. 10) et lors de la régénération (Fig.9) un échangeur dont les fonds inférieur et supérieur sont plats au lieu d'être bombés. En outre, cet échangeur ne comporte pas de plateaux à buselures, mais uniquement 2 buselures centrales et un plateau percé qui peut être traversé par les grains de résine. Selon la figure 9, le lit de résine est en appui contre le fond supérieur de l'échangeur tandis que selon la figure 10, le lit de résine est en appui contre le fond inférieur.

La figure 11 des dessins montre un dispositif comportant n échangeurs d'ions E1...En montés en parallèle pour le traitement d'eau de consommation. L'eau à traiter arrive par une canalisation 5 et l'eau traitée est évacuée par une canalisation 6. Une vanne trois voies G1....Gn est installée en tête de chacun des échangeurs E1...En. De même une vanne trois voies J1....Jn est installée en sortie de chacun des échangeurs.

Le circuit de régénération comprend une canalisation 7 d'arrivée de la solution régénérante, branchée en parallèle sur un des orifices des vannes J1...Jn. La régénération s'effectue à contre courant et chacune des vannes G1...Gn est reliée en parallèle à une canalisation 8 d'évacuation des éluats de régénération.

La canalisation 8 est équipée d'un conductivimètre 9 disposé en aval des échangeurs, selon le sens d'écoulement des éluats. Une vanne trois voies 10 est montée sur la canalisation 8, en aval du conductivimètre 9. Une des sorties de la vanne 10 est reliée à une canalisation conduisant au bac BA de récupération de la fraction des éluats réutilisable comme eau de service. Une autre sortie de la vanne 10 est reliée à une canalisation 12 pour les rejets non réutilisables.

La vanne 10 est commandée par un automate 13 auquel est reliée la sortie de mesure du conductivimètre 9. Aussi longtemps que le conductivimètre 9 donne une indication selon laquelle les éluats sortant par la conduite 8 sont utilisables comme eau de service pour la régénération, l'automate 13 commande la vanne 10 de manière qu'elle relie les conduites 8 et 11, et ferme la conduite 12. Par contre, lorsque les éluats ne sont plus utilisables comme eau de service en raison d'une teneur trop élevée en ions récupérés, la vanne 10 est placée dans la position qui ferme la conduite 11 et ouvre la liaison entre la conduite 8 et la conduite 12 vers les rejets.

Un piquage 14, équipé d'une vanne, est prévu sur le circuit 7 pour l'introduction de la solution de sel de régénération. Un piquage 15, muni d'une vanne, est prévu pour l'injection dans le circuit 7 d'une solution d'acide tandis qu'un piquage 16, muni d'une vanne, est prévu pour l'injection dans le circuit 7 d'une solution de désinfection.

Un adoucisseur 17 est prévu pour traiter une fraction de l'eau de régénération. Des vannes trois voies étant installées pour mettre en service ou isoler l'adoucisseur 17 selon les besoins.

Les différentes vannes sont commandées par l'automate 13.

Le fonctionnement du dispositif résulte des explications qui précèdent.

L'automate13 commande les vannes G1....Gn et J1...Jn de manière que le plus grand nombre des échangeurs travaillent en traitement de l'eau qui arrive par la canalisation 5, tandis qu'au moins un échangeur travaille en régénération pendant une durée égale à C/n, C étant la durée d'un cycle. A la fin de cette période il y a permutation quasi immédiate entre l'échangeur qui était en régénération et un autre qui était en traitement, et ainsi de suite.

Une fraction de l'eau de service pour la régénération peut traverser l'adoucisseur 17.

La figure 6 illustre l'assemblage des échangeurs E1....En et des différents éléments du dispositif de Fig.11, sous forme d'une cassette 18 compacte, sensiblement parallélépipédique rectangle. La cassette 18 constitue une unité pouvant être transportée en bloc. Cette cassette 18 peut être installée au pied d'un château d'eau pour le traitement de l'eau de consommation de ce château. Le transport de la cassette 18 et son remplacement sont particulièrement simples.

Les exemples donnés ci-après font apparaître des résultats particulièrement intéressants obtenus avec l'invention.

**Exemple 1 : Comparatif de l'efficacité et des caractéristiques entre deux échangeurs et onze échangeurs.**

**Eau à traiter**

| Ions | °f | mg/l |
|---|---|---|
| NO3$^-$ (12,4) | 4,44 | 55 |
| SO$_4^{2-}$ (9,6) | 2,29 | 22 |
| Cl$^-$ (7,1) | 6,27 | 44,5 |
| TAC (12,2) | 23,28 | 284 |
| Ca$^{2+}$ (4) | 28 | 112 |

- Débit distribué : 30 m$^3$/h
- Teneur maxi en NO3 dans l'eau distribuée : 35 mg/l

**Caractéristiques de l'installation**

| Paramètre | Duplex | Multiplex |
|---|---|---|
| Nombre d'échangeurs | 2 | 11 |
| Nombre d'échangeurs utiles | 1 | 10 |
| Volume totale de résines | 1 600 L | 715 L |
| Fuite max. en NO3- par échangeur | 5 mg/L | 15 mg/L |
| Fuite max. en NO3- sur l'installation | 5 mg/L | 5 mg/L |
| Teneur maxi en chlorures | 130,9 mg/L | 82 mg/L |
| Teneur moyenne en HCO3- | 242 mg/L | 256 mg/L |
| Teneur maxi en sulfates | 95 mg/L | 25 mg/L |
| pH | 8,2 (après soude) | 7,35 |
| Consommation d'eau de service | 13 L/m$^3$ traité | 3 L/m$^3$ traité |
| Consommation de sel | 173,3 g/m$^3$ traité | 149,5 g/m$^3$ traité |

Le taux de traitement correspond au pourcentage de volume d'eau traitée par rapport au volume d'eau distribuée (avec coupage).

**Consommation d'eau de service**

| | Duplex | Multiplex |
|---|---|---|
| Besoin en eau adoucie (l) | 2640 | 293 |
| Besoin total en eau (l) | 7943 | 512 |
| Apport d'eau nécessaire (l) | 7943 | 147 |
| Rejets (l) | 7943 | 147 |
| Rejet par m3 distribué (l) | 13,2 | 3 |

Dans le cas du système classique, appelé Duplex, le besoin total en eau de service est de 7943 litres. Une fraction de cette eau, 2640 litres, est adoucie. Comme toute l'eau est rejetée, l'apport nécessaire en eau correspond au besoin total.

En revanche, dans le dispositif Multiplex selon l'invention, le besoin total en eau est extrêmement limité : 512 litres. Sur ces 512 litres, 147 litres sont apportés et correspondent au volume d'eau rejetée (éluats), les 365 litres d'eau manquants provenant des eaux de service recyclées par le dispositif.

**Consommation de sel**

| | Duplex | Multiplex |
|---|---|---|
| Taux de régénération (g/l de résine) | 130 | 130 |
| Concentration régénérant (g/l) | 100 | 90 |
| Consommation sel par m3 distribué (g) | 173,3 | 149,5 |

**Eau distribuée**

|  | Duplex | Multiplex |
|---|---|---|
| Teneur maxi en Cl⁻ | 130,9 | 82 |
| Teneur maxi en $SO_4^{2-}$ | 95 | 25 |
| Teneur moyenne en $HCO_3^-$ | 242 | 256 |
| pH | 8,2 (après soude) | 7,35 |

**Exemple 2 : Comparatif de l'efficacité et des caractéristiques entre deux échangeurs et neuf échangeurs.**

L'eau à traiter est une eau provenant d'un forage de composition suivante :

| Paramètre | Valeur |
|---|---|
| Température | 13°C |
| pH | 7,5 |
| TAC | 25°f (305 mg/L) |
| THCa ou TCa | 31°f (124 mq/L) |
| Magnésium | 7,8°f (19 mg/L) |
| Sodium | 3,2°f (15 mg/L) |
| Chlorures | 5°f (36 mg/L) |
| Nitrates | 4,1°f (50 mg/L) |
| Sulfates | 5,6°f (54 mg/L) |

THCa est le titre hydrotimétrique calcique, c'est-à-dire la teneur en Calcium.
L'eau à distribuer doit avoir les caractéristiques suivantes :

- objectif en nitrates : 25mg/L, et,

- débit traité : 50m³/h.

- consommation annuelle : 333 500 m³/an

Comparatif :

| Paramètre | Duplex | Multiplex |
|---|---|---|
| Nombre d'échangeurs | 2 | 9 |
| Nombre d'échangeurs utiles | 1 | 8 |
| Volume total de résines | 4 400 L | 2 565 L |
| Fuite max. en $NO_3^-$ par échangeur | 5 mg/L | 15 mg/L |
| Fuite max. en $NO_3^-$ sur l'installation | 5 mg/L | 5 mg/L |
| Teneur maxi en chlorures | 172 mg/L | 137 mg/L |
| Teneur maxi en sulfates | 144 mg/L | 73 mg/L |
| Consommation d'eau de service | 27 L/m³ traité | 7,3 L/m³ traité |
| Consommation de sel | 366 g/m³ traité | 294 g/m³ traité |

(suite)

| Paramètre | Duplex | Multiplex |
|---|---|---|
| Consommation de soude | 48,6 m$^3$/an (NaOH à 30%) | Sans |
| Consommation d'acide | 2 425 L (H$_2$SO$_4$ 98%) | 11 529 L (HCl 33 %) |

## Exemple 3 : Comparatif relatif à la consommation d'eaux de service entre deux échangeurs et 8 échangeurs.

Quelque soit le type de l'échangeur d'ions régénéré à contre courant de bas en haut. La régénération se compose des phases suivantes :

| Phase de régénération | Volume d'éluats / Volume Résine |
|---|---|
| Compactage | 0,66 V.R |
| Passage du régénérant | 1,50 V.R |
| Poussage | 3,00 V.R |
| Rinçage | 6,00 V.R |
| Total : | 11,60 V.R |

En comparaison le dispositif selon l'invention aura les phases de régénération suivantes avec les répartitions

| Phase de régénération | Volume d'éluats / V. Résine | V. Eluats de forte salinité | Eau de service de faible salinité |
|---|---|---|---|
| Compactage | 0,50 ** | | 0.5 V.R |
| Passage du régénérant | 1,35 ** | 0,85 V.R | 0.5 V.R |
| Poussage | 3,00 | 0.5 V.R | 2,5 V.R |
| Rinçage | 2,4 * | | 2,4 V.R |
| Total : | 7,25 | 1,35 V.R | 5,9 V.R |

V.R. : volume de résine
(*) Le système selon l'invention permet la réduction du volume de rinçage à 2,4 volumes de résine au lieu de 6, par la réduction des volumes morts (la conception avec tubes et brides réduit considérablement les volumes morts du fait de l'absence de fonds bombés), ainsi que par la faible influence, en raison de l'effet de dilution (environ 1 pour 10), de la fuite de régénérant et de la variation de pH sur la totalité de l'eau distribuée.

Dans le système selon l'invention, les éluats sont collectés et leur devenir sera différent en fonction de leur salinité :

- Faible salinité : éluats réutilisés par le système comme eau de service pour la régénération suivante, et,
- Forte salinité : éluats rejetés, correspondant à la seule perte d'eau.

L'aiguillage des éluats vers le rejet ou vers la réutilisation comme eau de service est géré par un conductivimètre.
De plus pour le même volume de résine, le dispositif selon l'invention permet un cycle de volume d'eau traitée de près de 15% supplémentaire. Ce qui réduit encore les volumes d'éluats par rapport à la solution classique. Soit, au total une réduction théorique de près de 9 fois le volume d'éluat généré par un système classique. En pratique, on peut retenir une réduction de 6 fois le volume d'éluats.

(**) La mise en place d'un plateau percé en bas de colonne permet de réduire les vitesses de compactage (moins de débit pour le même effet) et de maintien de lit de résine lors de séquence de passage régénérant (dilution plus faible de la saumure d'où moins de volume d'eau de dilution).

**Exemple 4 : Exemple d'installation**

Caractéristiques générales :

- Construction : tubes échangeurs en PEHD (polyéthylène haute densité) d'une hauteur cylindrique de 2m
- Pression de service : 2 bars.

Le dispositif est constitué préférentiellement de 10 à 14 échangeurs d"ions en parallèle :

- 8 à 12 tubes en service dénitratation,
- 1 tube en régénération,
- 1 tube pour la résine d'adoucissement.

| Type | Diamètre interne tube (mm) | V. de résine en litres | Débit unitaire / tube * |
|---|---|---|---|
| Multiplex - 200 | 198 | 40 | 1000 l/h |
| Multiplex - 225 | 226 | 65 | 1600 l/h |
| Multiplex - 300 | 291 | 110 | 2600 l/h |
| Multiplex - 400 | 390 | 183 | 4300 l/h |
| Multiplex - 500 | 500 | 285 | 6800 l/h |
| (*) A vérifier en fonction de la teneur en nitrate | | | |

**Revendications**

1.  Dispositif de traitement d'un liquide par échange d'ions, comportant un circuit de régénération des résines contenues dans des échangeurs d'ions, comportant

    - au moins n=6 échangeurs d'ions actifs chacun fonctionnant selon un cycle complet d'une durée C comprenant un cycle de production et un cycle de régénération, montés en parallèle, et des moyens permettant de décaler les cycles,
    - un bac de stockage (BA) agencé pour recevoir les fractions d'éluats de régénération utilisables comme eau de service pour les régénérations suivantes,

    **caractérisé en ce que** les moyens permettant de décaler les cycles sont agencés pour décaler les cycles de C/(n-1), et pour qu'il y ait en permanence un échangeur en régénération les (n-1) autres échangeurs d'ions actifs étant en fonctionnement,
    **en ce qu'**un conductivimètre (9) est prévu sur le circuit de régénération des résines pour mesurer la salinité des éluats, et
    **en ce que** ledit conductivimètre (9) est relié à un automate (13) pour commander, en fonction de leur salinité mesurée, le rejet ou la réutilisation en eau de service des éluats.

2.  Dispositif selon la revendication 1, **caractérisé en ce qu'**à la place de p=2 ou 3 échangeurs d'ions montés en parallèle, de volume total de résine V, il comporte au moins n=6 échangeurs d'ions actifs de cycle d'une durée C, montés en parallèle dont le volume total de résine v est égal à :

    $$v = V \times p\,(n) / (p+1)(n-1)$$

    pour un débit équivalent, et des moyens permettant de décaler les cycles de C/(n-1).

3.  Dispositif selon la revendication 1 ou 2, **caractérisé en ce que** les échangeurs d'ions sont des échangeurs d'anions.

4.  Dispositif selon la revendication 3, **caractérisé en ce qu'**il comporte en outre sur le circuit de régénération un adoucisseur.

5. Dispositif selon l'une quelconque des revendications 1 à 4, **caractérisé en ce que** les échangeurs d'ions sont des échangeurs d'ions à contre-courant comportant une colonne comprenant deux moyens de répartition et/ou de collecte de fluide entre lesquels se trouve le lit de résine et comportant en outre un plateau percé, situé en partie basse de l'échangeur au-dessus du moyen de répartition et/ou de collecte de fluide inférieur, permettant l'accélération du flux interne lors des phases de régénération à contre-courant.

6. Dispositif selon l'une quelconque des revendications 1 à 5, **caractérisé en ce qu'**il se présente sous forme de cassette dans laquelle sont assemblés les différents éléments dudit dispositif.

7. Dispositif selon la revendication 6, **caractérisé en ce qu'**il présente des dimensions réduites de l'ordre de 2 x 4,5 x 2,5m.

8. Procédé de traitement d'un liquide par échange d'ions mettant en oeuvre le dispositif selon l'une quelconque des revendications précédentes, **caractérisé en ce que** les n échangeurs d'ions sont successivement régénérés, les n-1 autres échangeurs d'ions actifs étant alors en fonctionnement.

9. Procédé selon la revendication 8, **caractérisé en ce que** le taux de régénération est réduit avec une fuite maximum de chacun des échangeurs qui est supérieure à la fuite admissible, mais la fuite maximum de l'installation reste inférieure à la limite admissible.

10. Utilisation du dispositif selon l'une quelconque des revendications 1 à 7, pour la dénitratation de l'eau.

11. Utilisation du dispositif selon l'une quelconque des revendications 1 à 7, pour la décarbonatation de l'eau.

**Patentansprüche**

1. Vorrichtung zur Behandlung einer Flüssigkeit durch Ionenaustausch, die einen Regenerationskreislauf für in Ionenaustauschern enthaltene Harze aufweist, mit

   - mindestens n=6 parallel angeordneten aktiven Ionenaustauschern, die jeweils entsprechend einem vollständigen Zyklus einer Dauer C funktionieren, der einen Produktionszyklus und einen Regenerationszyklus umfasst, und die Mittel aufweisen, welche ein Verschieben der Zyklen ermöglichen,
   - einem Vorratsbehälter (BA), der zur Aufnahme der Anteile von Regenerationseluaten ausgebildet ist, die als Brauchwasser für die folgenden Regenerationen verwendbar sind,

   **dadurch gekennzeichnet, dass** die das Verschieben der Zyklen ermöglichenden Mittel derart ausgebildet sind, dass sie die Zyklen um C/(n-1) verschieben, und dass sich dauerhaft ein Austauscher in Regeneration befindet, während die (n-1) weiteren aktiven Ionenaustauscher in Betrieb sind, und
   dass an dem Kreislauf zur Regeneration von Harzen ein Leitfähigkeitsmessgerät (9) zum Messen des Salzgehalts der Eluate vorgesehen ist, und
   dass das Leitfähigkeitsmessgerät (9) mit einem Automaten (13) verbunden ist, um die Zurückweisung oder die Neubenutzung der Eluate in dem Brauchwasser als Funktion ihres gemessenen Salzgehalts zu befehlen.

2. Vorrichtung nach Anspruch 1, **dadurch gekennzeichnet, dass** sie anstelle von p=2 oder 3 parallel angeordneter Ionenaustauscher mit einem Gesamt-Harzvolumen V mindestens n = 6 parallel angeordnete aktive Ionenaustauscher mit einem Zyklus der Dauer C, deren Gesamt-Harzvolumen v bei gleichem Durchfluss

$$v = V \times p(n) / (p+1)(n-1)$$

beträgt, und Mittel aufweist, die ein Verschieben der Zyklen um C/(n-1) ermöglichen.

3. Vorrichtung nach Anspruch 1 oder 2, **dadurch gekennzeichnet, dass** die Ionenaustauscher Anionenaustauscher sind.

**4.** Vorrichtung nach Anspruch 3, **dadurch gekennzeichnet, dass** sie ferner an dem Regenerationskreislauf einen Enthärter aufweist.

**5.** Vorrichtung nach einem der Ansprüche 1 bis 4, **dadurch gekennzeichnet, dass** die Ionenaustauscher Gegenstrom-Ionenaustauscher sind, die eine Reihe mit zwei Flüssigkeitsaufteilungsvorrichtungen und/oder Flüssigkeitssammelvorrichtungen aufweist, zwischen denen sich das Harzbett befindet, und ferner eine im unteren Bereich des Austauschers unter der Flüssigkeitsaufteilungsvorrichtung und/oder unteren Flüssigkeitssammelvorrichtung gelegene perforierte Plattform aufweist, die eine Beschleunigung des inneren Flusses während Gegenstrom-Regenerationsphasen ermöglicht.

**6.** Vorrichtung nach einem der Ansprüche 1 bis 5, **dadurch gekennzeichnet, dass** sie in Form einer Kassette ausgebildet ist, in der die verschiedenen Elemente der Vorrichtung angeordnet sind.

**7.** Vorrichtung nach Anspruch 6, **dadurch gekennzeichnet, dass** sie reduzierte Abmessungen in der Größenordnung von 2 x 4,5 x 2,5 m hat.

**8.** Verfahren zur Behandlung einer Flüssigkeit durch Ionenaustausch unter Verwendung einer Vorrichtung nach einem der vorhergehenden Ansprüche, **dadurch gekennzeichnet, dass** die n Ionenaustauscher nacheinander regeneriert werden, wobei die n-1 weiteren aktiven Ionenaustauscher währenddessen in Betrieb sind.

**9.** Verfahren nach Anspruch 8, **dadurch gekennzeichnet, dass** die Regenerationsrate mit einer Maximal-Leckage jedes der Austauscher reduziert wird, die über der zulässigen Leckage liegt, jedoch die maximale Installationsleckage unter dem zulässigen Grenzwert liegt.

**10.** Verwendung der Vorrichtung nach einem der Ansprüche 1 bis 7 für die Denitrifikation von Wasser.

**11.** Verwendung der Vorrichtung nach einem der Ansprüche 1 bis 7 für die Entkarbonisierung von Wasser.

**Claims**

**1.** A liquid treatment device by ion exchange, including a circuit for regenerating resins contained in ion exchangers, including

- at least n=6 active ion exchangers each operating according to a complete cycle with a duration C comprising a production cycle and a regeneration cycle, connected in parallel, and means for offsetting the cycles,
- a storage tank (BA) arranged to receive fractions of regeneration eluates usable as service water for the next regenerations,

**characterised in that** the means for offsetting the cycles are arranged to offset the cycles by C/(n-1), and such that there is permanently a regenerating exchanger, the (n-1) other active ion exchangers being in operation, **in that** a conductivity meter (9) is provided on the resin regeneration circuit to measure the salinity of the eluates, and **in that** said conductivity meter (9) is connected to an automaton (13) to control, depending on their measured salinity, discharge or reuse as service water of the eluates.

**2.** The device according to claim 1, **characterised in that** in place of p=2 or 3 ion exchangers connected in parallel, with a resin total volume V, it includes at least n=6 active ion exchangers with a cycle of a duration C, connected in parallel, the resin total volume v of which is equal to:

$$v = V \times p\,(n) / (p+1)(n-1)$$

for an equivalent flowrate, and means for offsetting the cycles by C/(n-1).

**3.** The device according to claim 1 or 2, **characterised in that** the ion exchangers are anion exchangers.

**4.** The device according to claim 3, **characterised in that** it further includes a softener on the regeneration circuit.

**5.** The device according to any of claims 1 to 4, **characterised in that** ion exchangers are counter-current ion exchangers including a column comprising two fluid distribution and/or collecting means between which the resin bed is located and further including a pierced tray, located at the bottom of the exchanger above the lower fluid distribution and/or collecting means, enabling the inner flow to be accelerated during counter-current regeneration phases.

**6.** The device according to any of claims 1 to 5, **characterised in that** it comes as a cassette in which the different elements of said device are assembled.

**7.** The device according to claim 6, **characterised in that** it has reduced dimensions in the order of 2x4.5x2.5m.

**8.** A liquid treatment method by ion exchange implementing the device according to any of the preceding claims, **characterised in that** the n ion exchangers are successively regenerated, the n-1 other active ion exchangers being thereby in operation.

**9.** The method according to claim 8, **characterised in that** the regeneration rate is reduced with a maximum leak of each of the exchangers which is higher than the allowable leak, but the maximum leak of the facility remains lower than the allowable limit.

**10.** A use of the device according to any of claims 1 to 7, for denitrating water.

**11.** A use of the device according to any of claims 1 to 7, for decarbonating water.

FIG.1

FIG.2

NO3 = 172 mg/l
SO4 = 47 mg/l
HCO3 = 342 mg/l
CL = 66 mg/l

FIG.3

Fuite en NO3

Fuite admissible

Fuite maxi

0

3/4
Cycle

4/4
Cycle

FIG.4

Teneurs

Chlorures : Fluctuations
avec échangeur simplex

PROGRESSION DU CYCLE

Chlorures : Fluctuations
avec echangeurs multiplex

Chlorures

TAC

TAC

Teneurs
moyennes
avec
multiplex

Nitrates

nitrates

Temps

Durée du cycle

FIG.5

FIG.8

FIG.10

FIG.7

FIG.9

FIG.6

FIG.11

EP 2 134 653 B1

**EP 2 134 653 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020117431 A1